# EUROPÄISCHE PATENTSCHRIFT

(11) **EP 3 783 783 B1**
(45) Veröffentlichungstag und Bekanntmachung des Hinweises auf die Patenterteilung: **23.04.2025**
(21) Anmeldenummer: 19193436.3
(22) Anmeldetag: 23.08.2019
(51) Int. Cl.: H02M 1/32, H02M 5/293, H02J 3/18

(54) **ANORDNUNG ZUM REGELN EINES LEISTUNGSFLUSSES IN EINEM WECHSELSPANNUNGSNETZ UND VERFAHREN ZUM SCHUTZ DER ANORDNUNG**
ASSEMBLY FOR REGULATING A POWER FLOW IN AN AC NETWORK AND METHOD FOR PROTECTING SAID ASSEMBLY
AGENCEMENT DE RÉGULATION D'UN FLUX DE PUISSANCE DANS UN RÉSEAU À TENSION ALTERNATIVE ET PROCÉDÉ DE PROTECTION DE L'AGENCEMENT

(43) Veröffentlichungstag der Anmeldung: 24.02.2021
(73) Patentinhaber: Siemens Energy Global GmbH & Co. KG, 81739 München (DE)
(72) Erfinder: Pieschel, Martin, 90473 Nürnberg (DE)

(56) Entgegenhaltungen:
- EP-A2- 0 868 001
- DE-A1- 102008 034 312
- DE-A1- 102010 022 043
- DE-A1- 102017 220 599
- US-A- 4 689 733
- US-A- 6 118 676
- US-A1- 2015 333 655
- US-A1- 2018 212 533
- US-A1- 2019 199 237
- JINLIAN LIU ET AL: "Comprehensive Power Flow Analyses and Novel Feedforward Coordination Control Strategy for MMC-Based UPFC", ENERGIES, vol. 12, no. 5, 1 March 2019 (2019-03-01), CH, pages 824, XP055664943, ISSN: 1996-1073, DOI: 10.3390/en12050824

## Beschreibung

Die Erfindung betrifft eine Anordnung zum Steuern eines Leistungsflusses in einem Wechselspannungsnetz umfassend eine Umrichteranordnung mit einem ersten Umrichter und einem zweiten Umrichter, wobei die Umrichter gleichspannungsseitig über einen Gleichspannungszwischenkreis miteinander und wechselspannungsseitig jeweils mit dem Wechselspannungsnetz verbindbar sind. Im Betrieb der Anordnung sind die Umrichter entsprechend mit dem Wechselspannungsnetz verbunden.

Eine solche Anordnung kann insbesondere zur Leistungsflusskontrolle in elektrischen Drehstromnetzen bzw. Versorgungsnetzen eingesetzt werden. Sie wird oftmals als Universal Power Flow Controller (UPFC) bezeichnet. Ein UPFC ist beispielsweise aus dem Beitrag "Comprehensive Power Flow Analyses and Novel Feedforward Coordination Control Strategy for MMC-based UPFC" von Liu et al., Energies 2019 bekannt. Der Erste Umrichter der bekannten Anordnung wird üblicherweise als Parallelumrichter und der zweite Umrichter als Serienumrichter bezeichnet.

Treten im Wechselspannungsnetz Netzkurzschlüsse auf, so bildet sich ein Netzkurzschlussstrom heraus, der die Stromtragfähigkeit des Serienumrichters deutlich überschreitet. Zur Vermeidung von Schäden wird bei der bekannten Anordnung zwischen den Serienumrichter und das Wechselspannungsnetz ein Kurzschließer aus einschaltbaren Leistungshalbleitern, beispielsweise antiparallel geschalteten Thyristoren, geschaltet. Zum Zünden des Kurzschließers der bekannten Anordnung muss der Serienumrichter allerdings erst eine notwendige Anfangsspannung aufbauen. Je nach Aufbau des Serienumrichters kann es hierbei zu einem unkontrollierten Spannungsaufbau an bzw. im Serienumrichter kommen, was zu dessen Beschädigung führen kann.

Aus der DE 10 2010 022 043 A1 ist eine Anlage zum Übertragen elektrischer Energie mit zwei gleichspannungsseitig miteinander verbundenen Umrichtern bekannt. Gleichspannungsseitig der Umrichter ist eine Reihenschaltung aus Energiespeichern mit einer zu der Reihenschaltung in Reihe geschalteten Unterbrechereinheit angeordnet.

In der DE 10 2008 034 312 A1 ist ein SpannungszwischenkreisUmrichter mit selbstgeführten Stromrichtern offenbart, die gleichspannungsseitig elektrisch parallel zu einem Spannungszwischenkreis-Kondensator geschaltet sind. Der Umrichter umfasst dabei eine Kurzschließereinheit, die einen Halbleiterschalter aufweist. Die Kurzschließereinheit ist einerseits mit einem wechselspannungsseitigen Anschluss einer Phase eines der Stromrichter und andererseits mit einer Minusstromschiene eines Spannungszwischenkreises des Spannungszwischenkreis-Umrichters verknüpft.

US 4 689 733 A offenbart eine HGÜ-Übertragungsanlage mit zwei Thyristor-Stromrichtern, bei der im Zwischenkreis eine Kurzschlussanordnung mit Thyristor-Schaltern vorgesehen ist.

EP 0 868 001 A2 offenbart ein HGÜ-System, wobei einer der HGÜ-Stromrichter DC-seitig über eine Anordnung mit einem IGBT und einem Widerstand geerdet ist.

Die Aufgabe der Erfindung besteht darin, eine Artgemäße Anordnung vorzuschlagen, die möglichst kostengünstig und zuverlässig im Betrieb ist.

Die Aufgabe wird bei einer eingangs genannten Anordnung erfindungsgemäß dadurch gelöst, dass im Gleichspannungszwischenkreis parallel zu den Umrichtern ein Schaltzweig vorgesehen ist, in dem wenigstens ein steuerbares Schaltelement angeordnet ist. Der Schaltzweig verbindet die beiden Gleichspannungspole des Gleichspannungszwischenkreises, so dass sich der Spannungszwischenkreis über das wenigstens eine Schaltelement im Fehlerfall entladen kann. Ein Vorteil der erfindungsgemäßen Anordnung besteht darin, dass der Schaltzweig den zuvor beschriebenen Kurzschließer ersetzen kann. Bei Auftreten eines Überstromes, bzw. sobald ein solcher Überstrom in der Anordnung erkannt wird, kann das wenigstens eine Schaltelement gezündet werden. Im Spannungszwischenkreis ist stets eine Gleichspannung vorhanden, so dass die Zündung des Schaltelements jederzeit zuverlässig erfolgen kann. Des Weiteren ergibt sich ein Kostenvorteil daraus, dass die Anzahl der Schaltelemente (beispielsweise Thyristoren) im Schaltzweig gegenüber dem zuvor beschriebenen Kurzschließer je nach Anwendung reduziert werden kann. Zudem ist hierbei eine besonders kompakte Ausführung denkbar. Die Auslegung des zweiten Umrichters ist geeigneterweise derart gewählt, dass dessen Nennstrom dem Nennstrom des Wechselspannungsnetzes entspricht

Das wenigstens eine Schaltelement ist geeigneterweise zum Schalten von Strömen oberhalb von 1 kA, vorzugsweise oberhalb von 5 kA, innerhalb von weniger als 10 ms, bevorzugt weniger als 5 ms eingerichtet. Die Auslegung des Schaltelements auf hohe Ströme ist vorteilhaft, weil, wie eigene Untersuchungen gezeigt haben, der Kurzschlussstrom bis auf ein Zehnfaches des Nennstromes ansteigen kann. Diese hohen Ströme müssen eigenen Untersuchungen zufolge entsprechend schnell geschaltet werden, um eine Beschädigung der Anordnung bzw. deren Überauslegung vermeiden zu können. Das oder die Schaltelemente weisen geeigneterweise eine Durchlassrichtung auf, die der Stromrichtung des Kurzschlussstromes im Schaltzweig entspricht.

Das wenigstens eine Schaltelement kann beispielsweise ein Halbleiterschalter, insbesondere ein Leistungshalbleiterschalter sein. Ein im Aufbau und Steuerung einfaches Schaltelement, das den Anforderungen genügen kann, ist beispielsweise ein Thyristor. Weitere Beispiele sind entsprechend auf die benötigte Stromtragfähigkeit ausgelegte IGBTs, IGCTs oder dergleichen. Diese weisen insbesondere den Vorteil auf, dass sie nicht nur einschaltbar, sondern auch abschaltbar sind.

Erfindungsgemäß ist im Schaltzweig eine Vielzahl von, vorzugsweise gleichartigen, Schaltelementen vorgesehen, die in einer Reihenschaltung miteinander verbunden sind. Die Anzahl der Schaltelemente ist grundsätzlich beliebig wählbar und kann an die jeweilige Anwendung angepasst werden. Die Schaltelemente sind steuerbar, wobei ihre Steueranschlüsse geeigneterweise mit einer gemeinsamen Steuerungseinrichtung verbunden sind, die entsprechende Ansteuersignale an die Schaltelemente übermitteln kann. Durch die Verwendung einer Mehrzahl an Schaltelementen kann vorteilhaft die Sperrfähigkeit im Schaltzweig erhöht werden.

Gemäß der Erfindung ist wenigstens einer der Umrichter ein modularer Mehrstufenumrichter (MMC). Der modulare Mehrstufenumrichter zeichnet sich insbesondere durch eine modulare Bauweise aus. Der MMC umfasst Konverterarme, die sich jeweils zwischen einem wechselspannungsseitigen Anschluss des MMC und einem der Gleichspannungspole des Spannungszwischenkreises erstrecken. Jeder Konverterarm umfasst eine Reihenschaltung von Schaltmodulen. Jedes Schaltmodul umfasst mehrere, vorzugsweise abschaltbare, Halbleiterschalter sowie einen Energiespeicher, üblicherweise in Form eines Modulkondensators. Mittels geeigneter Ansteuerung der Halbleiterschalter der Schaltmodule kann an den Anschlüssen jedes der Schaltmodule zumindest eine Spannung erzeugt werden, die der Energiespeicherspannung oder einer Nullspannung entspricht. Es wird als vorteilhaft angesehen, wenn sowohl der erste als auch der zweite Umrichter MMCs sind. Als Alternativen zum MMC sind andere Spannungszwischenkreisumrichter (VSC) denkbar. Der MMC weist insbesondere den Vorteil auf, dass aufgrund der erzeugten nahezu idealen Sinusspannung auf gleichspannungsseitige und wechselspannungsseitige Filter weitgehend verzichtet werden kann.

Da die an jedem Konverterarm erzeugbare Spannung sich nach der Anzahl der dort in Reihe geschalteten Schaltmodule bemisst, kann die insgesamt am jeweiligen MMC erzeugbare Spannung durch die Anzahl der Schaltmodule insgesamt bestimmt werden. Es wird als vorteilhaft angesehen, wenn die Anzahl der Schaltmodule, insgesamt bzw. in jedem Konverterarm, derart bemessen ist, dass die mittels des MMC erzeugbare Spannung mindestens 5% größer als eine vorbestimmte Nennspannung ist. Auf diese Weise kann erreicht werden, dass auch bei Ausfall einer entsprechenden Anzahl von Schaltmodulen noch die geforderte Nennspannung vom Umrichter gestellt werden kann.

Vorzugsweise sind die Schaltmodule des MMC Halbbrückenschaltmodule oder Vollbrückenschaltmodule. Geeigneterweise ist jedem der Halbleiterschalter im Schaltmodul eine Freilaufdiode zugeordnet, die antiparallel zu diesem geschaltet ist. Halbbrückenschaltmodule weisen den Vorteil relativ geringer Verluste im Betrieb auf. Zum Beispiel kann der zweite Umrichter ein MMC mit Halbbrückenschaltmodulen sein. In einem solchen Fall kann in einem Fehlerfall der Kurzschlussstrom über die Freilaufdioden und den Schaltzweig fließen. Das Vollbrückenschaltmodul ist derart aufgebaut, dass an dessen Anschlüssen zusätzlich zu der Energiespeicherspannung und der Nullspannung auch eine Energiespeicherspannung mit entgegengesetzter Polarität erzeugt werden kann. Somit kann ein MMC mit Vollbrückenschaltmodulen eine Gegenspannung aufbauen kann. Es wird als vorteilhaft angesehen, wenn der erste Umrichter ein MMC mit Vollbrückenschaltmodulen ist. Dieser ist dazu eingerichtet, auf dessen Gleichspannungsseite eine Gegenspannung zu erzeugen. Diese Gegenspannung kann dazu genutzt werden, den Strom durch den Schaltzweig zumindest kurzzeitig auf null zu reduzieren. Auf diese Weise können beispielsweise als Schaltelemente verwendete Thyristoren abgeschaltet werden. Zum Laden (Wiederaufladen) der Energiespeicher der Schaltmodule des zweiten Umrichters kann mittels des ersten Umrichters eine positive Zwischenkreisspannung im Spannungszwischenkreis erzeugt werden. Es ist hierbei anzumerken, dass auch andere Schaltungstopologien der Schaltmodule der beiden Umrichter sind selbstverständlich denkbar sind.

Gemäß einer Ausführungsform der Erfindung ist jedem Schaltmodul ein Schutzschalter, vorzugsweise ein Schutzthyristor, zugeordnet, mittels dessen ein Strom durch das Schaltelement begrenzbar ist. Der Schutzschalter ist vorzugsweise parallel zu den Anschlussklemmen des Schaltmoduls angeordnet. Im Fehlerfall kann der Schutzschalter dazu verwendet werden, den Kurzschlussstrom zu führen. Anstelle eines Schutzthyristors kann beispielsweise auch eine separate Hochleistungsdiode verwendet werden.

Erfindungsgemäß ist der erste Umrichter mittels eines Anpasstransformators mit dem Wechselspannungsnetz verbunden. Der Anpasstransformator wird in diesem Zusammenhang oftmals als Paralleltransformator bzw. shunt-Trasformator bezeichnet. Der Anpasstransformator ist zweckmäßigerweise derart ausgestaltet, dass mittels des Anpasstransformators ein Nullsystemstrom im Fehlerfall nicht in den ersten Umrichter fließen kann. Es kann vorteilhaft sein, wenn die wechselspannungsseitigen Windungen des Anpasstransformators in einer Delta-Schaltung miteinander verbunden sind, während die Umrichterseitigen Windungen des Anpasstransformators in einer Sternschaltung miteinander verbunden sind. Der Anpasstransformator verfügt vorzugsweise über eine on-load Spannungsanpassung, z.B. einen Stufenschalter.

Erfindungsgemäß ist der zweite Umrichter mittels eines seriellen Transformators mit dem Wechselspannungsnetz verbunden. Eine wechselspannungsseitige Windung des seriellen Transformators ist dabei seriell in eine Wechselspannungsleitung des Wechselspannungsnetzes eingefügt. Der serielle Transformator (Serientransformator) hat insbesondere die Aufgabe, eine galvanische Trennung zwischen dem Wechselspannungsnetz und dem zweiten Umrichter herzustellen. Die umrichterseitigen Windungen des Serientransformators können beispielsweise in einer Dreieck-Schaltung oder einer Sterpunktschaltung miteinander verbunden sein.

Besonders bevorzugt ist eine Verbindung des ersten oder des zweiten Umrichters mit dem Wechselspannungsnetz mittels eines Überbrückungsschalters überbrückbar. Insbesondere kann die Verbindung mittels des seriellen Transformators überbrückbar sein. Der Überbrückungsschalter überbrückt dabei geeigneterweise den Stromfluss über die wechselspannungsseitigen Windungen des seriellen Transformators. Der Schaltzweig braucht den Kurzschlussstrom nur so lange zu führen, bis der Überbrückungsschalter geöffnet wird. Der Überbrückungsschalter kann beispielsweise ein mechanischer Schalter sein.

Die Erfindung betrifft ferner ein Verfahren zum Schutz einer Anordnung zum Regeln eines Leistungsflusses in einem Wechselspannungsnetz.

Die Aufgabe der Erfindung ist es, ein solches Verfahren vorzuschlagen, das möglichst zuverlässig ist.

Die Aufgabe wird erfindungsgemäß durch ein Verfahren zum Schutz einer erfindungsgemäßen Anordnung gelöst, wobei das Verfahren folgende Verfahrensschritte umfasst: Erkennen eines Überlastfehlers im Wechselspannungsnetz und/oder der Anordnung, Schalten des wenigstens eines Schaltelementes im Schaltzweig der Anordnung, so dass ein Stromfluss durch den Schaltzweig ermöglicht wird, Überbrücken einer Verbindung des ersten und/oder des zweiten Umrichters mit dem Wechselspannungsnetz mittels eines dazu vorgesehenen Überbrückungsschalters. Die Fehlererkennung kann zum Beispiel anhand einer Auswertung eines Stromes durch die Anordnung oder eines entsprechenden Stromanstiegs erfolgen. Als Kriterium kann dabei beispielsweise eine Überschreitung einer Schwelle eines Zweifachen, bevorzugt eines Fünffachen eines Nennstromes sein. Die Anordnung kann hierzu über geeignete Messvorrichtungen wie z.B. Stromwandler und/oder Spannungswandler verfügen. Ist im Schaltzweig mehr als ein Schaltelement geschaltet, so erfolgt das Einschalten der Schaltelemente bevorzugt gleichzeitig (das Ansteuersignal wird gleichzeitig gesendet, u.U. unter Berücksichtigung der entsprechenden Leitungslängen). Vorzugsweise erreichen die Schaltelemente den leitenden Zustand innerhalb von 5 ms. Das oder die Schaltelemente bleiben zumindest so lange eingeschaltet, bis der Überbrückungsschalter den Strom übernimmt. Der Überbrückungsschalter kann, wie bereits zuvor erwähnt, ein mechanischer Schalter sein.

Ein wesentlicher Vorteil des erfindungsgemäßen Verfahrens ist, dass ein zuverlässiger Schutz der Anordnung bereitgestellt ist, wobei zugleich auf aufwendige Schaltkonfigurationen, wie beispielsweise einen bekannten Doppelthyristor-Shunt, verzichtet werden kann. Weitere Vorteile ergeben sich aus den zuvor im Zusammenhang mit der erfindungsgemäßen Anordnung beschriebenen Vorteilen.

Die Erfindung wird im Folgenden anhand der in den Figuren 1 bis 4 dargestellten Ausführungsbeispielen weiter erläutert.
Figur 1 zeigt ein Ausführungsbeispiel einer erfindungsgemäßen Anordnung in einer schematischen Darstellung;
Figur 2 zeigt ein Beispiel eines MMC für die Anordnung der Figur 1 in einer schematischen Darstellung;
Figur 3 zeigt ein erstes Beispiel eines Schaltmoduls für den MMC der Figur 2 in einer schematischen Darstellung;
Figur 4 zeigt ein zweites Beispiel eines Schaltmoduls für den MMC der Figur 2 in einer schematischen Darstellung.

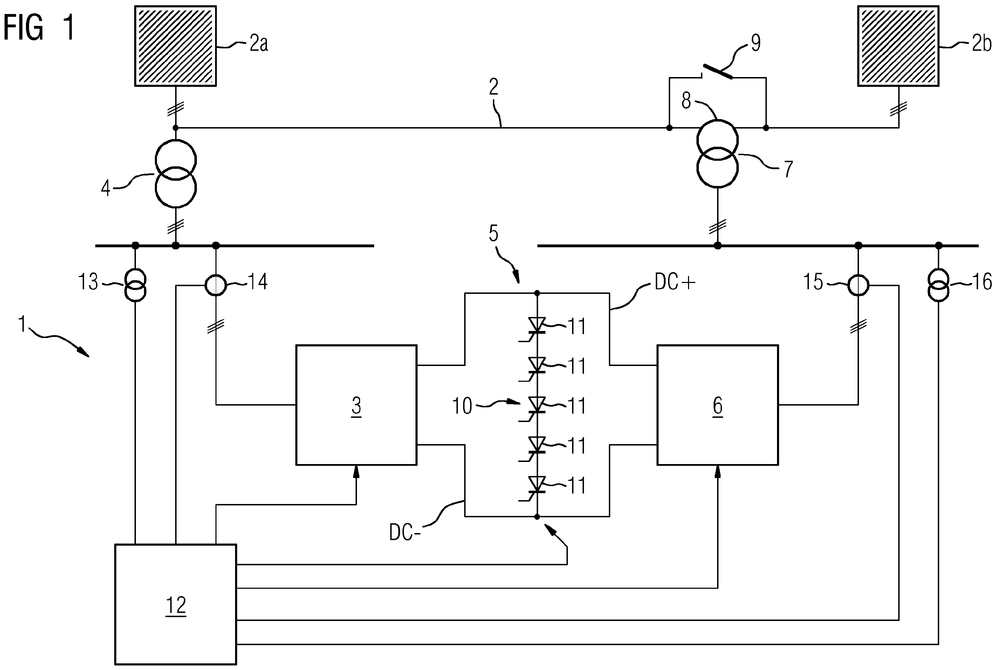

In Figur 1 ist eine Anordnung 1 zum Steuern eines Leistungsflusses in einem Wechselspannungsnetz dargestellt. In dem Beispiel der Figur 1 ist das Wechselspannungsnetz 2 durch eine Übertragungsleitung zwischen einem ersten Versorgungsnetz 2a und einem zweiten Versorgungsnetz 2b gegeben. Die Anordnung 1 umfasst einen ersten Umrichter 3. Der erste Umrichter 3 ist wechselspannungsseitig mittels eines Paralleltransformators 4 mit dem Wechselspannungsnetz 2 verbunden. Ferner ist der erste Umrichter 3 gleichspannungsseitig über einen Spannungszwischenkreis 5 mit einem zweiten Umrichter 6 verbunden. Der zweite Umrichter 6 ist wechselspannungsseitig mittels eines Serientransformators 7 mit dem Wechselspannungsnetz 2 verbunden. Die Verbindung des zweiten Umrichters 6 mit dem Wechselspannungsnetz 2, im gezeigten Beispiel insbesondere die wechselspannungsseitigen Wicklungen 8 des Serientransformators 7, kann mittels eines mechanischen Überbrückungsschalters 9 überbrückt werden.

Im Spannungszwischenkreis 5 ist ein Schaltzweig 10 angeordnet, der sich zwischen einem ersten und einem zweiten Gleichspannungspol DC+, DC- erstreckt. In dem Schaltzweig 10 ist eine Reihenschaltung von Schaltelementen in Form von Thyristoren 11 angeordnet.

Die Anordnung 1 umfasst ferner eine Regelungseinrichtung bzw. Ansteuereinheit 12, die zur Ansteuerung von Halbleiterschaltern der Umrichter 3, 6 sowie der Thyristoren 11 eingerichtet ist. Die Regelungseinrichtung 12 ist mit einer Strommesseinrichtung 14 zum Messen eines Stromes durch den ersten Umrichter 3, mit einer Spannungsmesseinrichtung 13 zum Messen von Anschlussspannungen des ersten Umrichters 3, mit einer weiteren Strommesseinrichtung 15 zum Messen eines Stromes durch den zweiten Umrichter 6 sowie mit einer weiteren Spannungsmesseinrichtung 16 zum Messen von Anschlussspannungen des zweiten Umrichters 6 verbunden.

Die Regelungseinrichtung 12 ist dazu eingerichtet, aufgrund der Strom- und Spannungsüberwachung einen Fehlerfall, zum Beispiel einen Überlastfall, zu detektieren. Dazu wird beispielsweise überprüft, ob der gemessene Strom eine vorbestimmte Stromschwelle überschreitet. Wird ein solcher Überlastfehler erkannt, so werden die Schalteinheiten 11 im Schaltzweig mittels entsprechender Ansteuerungssignale eingeschaltet, so dass ein Stromfluss, insbesondere ein Kurzschlussstrom durch den Schaltzweig ermöglicht wird. Zugleich oder im Anschluss wird der Überbrückungsschalter 9 angesteuert, einzuschalten. Mittels des Überbrückungsschalters wird der Serientransformator 7 und damit die Verbindung des zweiten Umrichters 6 mit dem Wechselspannungsnetz 2 überbrückt, so dass die Anordnung 1 insgesamt vor Überlast geschützt ist.

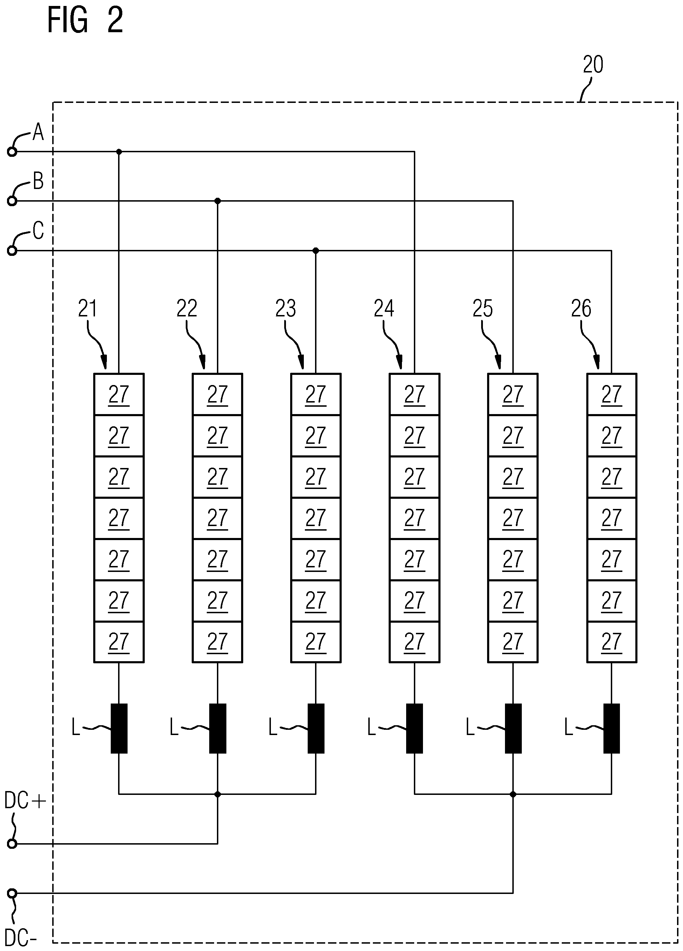

In Figur 2 ist ein MMC 20 dargestellt, der als erster und/oder zweiter Umrichter 3, 6 der Anordnung 1 der Figur 1 einsetzbar ist. Der MMC 20 ist dreiphasig ausgebildet und umfasst entsprechend drei Wechselspannungsanschlüsse A, B, C sowie einen ersten Gleichspannungsanschluss zum Verbinden mit dem ersten Gleichspannungspol DC+ und einen zweiten Gleichspannungsanschluss zum Verbinden mit dem zweiten Gleichspannungspol DC-. Der MMC 20 umfasst sechs Konverterarme 21-26, die sich jeweils zwischen einem der Wechselspannungsanschlüsse A-C und einem der Gleichspannungsanschlüsse erstrecken. Jeder Konverterarm 21-26 weist eine Arminduktivität L sowie eine Reihenschaltung von Schaltmodulen 27 auf.

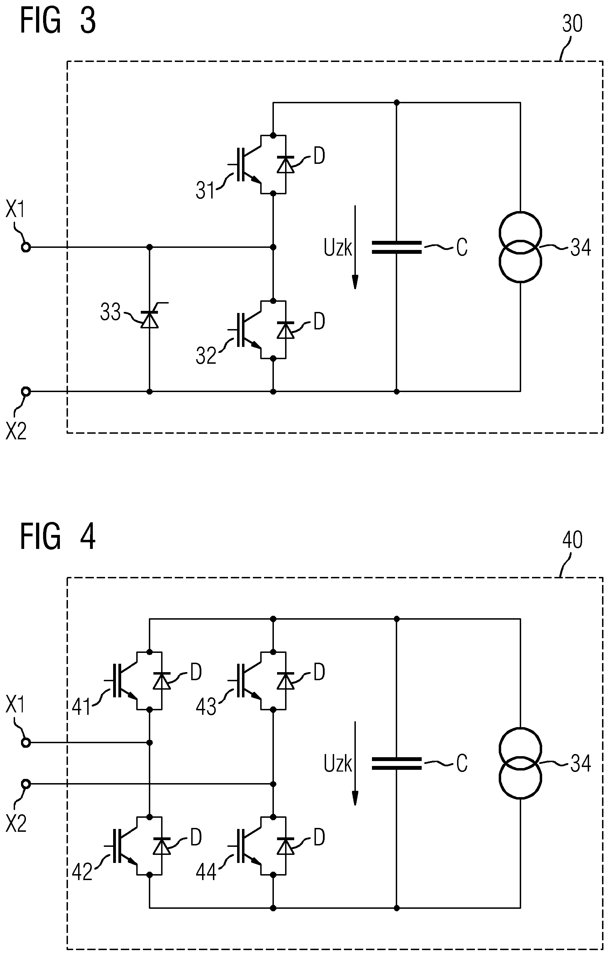

In Figur 3 ist ein Halbbrückenschaltmodul 30 dargestellt, das als Schaltmodul 27 im MMC 20 der Figur 2 einsetzbar ist. Das Halbbrückenschaltmodul 30 umfasst einen ersten Halbleiterschalter 31 und einen zweiten Halbleiterschalter 32, denen jeweils eine Freilaufdiode D antiparallel geschaltet ist. Ein Kondensator C ist zwischen einem Kollektoranschluss des ersten Halbleiterschalters 31 und dem Emitteranschluss des zweiten Halbleiterschalters 32 angeordnet. Zwischen einem ersten Anschluss X1 und einem zweiten Anschluss X2 des Halbbrückenschaltmoduls 30 ist ein Schutzthyristor 33 angeordnet, der im Fehlerfall zur Entlastung der Halbleiterschalter 31, 32 den Kurschlussstrom gemäß seiner Durchlassrichtung führen kann. Zur Überwachung einer Kondensatorspannung Uzk am Kondensator C dient ein Spannungsmesser 34.

In Figur 4 ist ein Vollbrückenschaltmodul 40 dargestellt, das als Schaltmodul 27 im MMC 20 der Figur 2 einsetzbar ist. Das Vollbrückenschaltmodul 40 umfasst einen ersten Halbleiterschalter 41 und einen zweiten Halbleiterschalter 42, einen dritten Halbleiterschalter 43 sowie einen vierten Halbleiterschalter 44, denen jeweils eine Freilaufdiode D antiparallel geschaltet ist. Ein Kondensator C ist zwischen einem Kollektoranschluss des ersten Halbleiterschalters 41 bzw. des dritten Halbleiterschalters 43 und dem Emitteranschluss des zweiten Halbleiterschalters 42 bzw. des vierten Halbleiterschalters 44 angeordnet. Ein erster Anschluss X1 des Vollbrückenschaltmoduls 40 ist zwischen dem ersten und dem zweiten Halbleiterschalter 41, 42, ein zweiter Anschluss X2 des Vollbrückenschalters 40 ist zwischen dem dritten und dem vierten Halbleiterschalter 43, 44 angeordnet.

## Patentansprüche

1. Anordnung (1) zum Steuern eines Leistungsflusses in einem Wechselspannungsnetz (2) umfassend
eine Umrichteranordnung mit einem ersten Umrichter (3) und einem zweiten Umrichter (6), wobei die Umrichter (3,6) gleichspannungsseitig über einen Gleichspannungszwischenkreis (5) miteinander und wechselspannungsseitig jeweils mit dem Wechselspannungsnetz (2) verbindbar sind, wobei der erste und der zweite Umrichter jeweils ein modularer Mehrstufenumrichter ist, wobei der erste Umrichter (3) mittels eines Anpasstransformators (4) und der zweite Umrichter (6) mittels eines seriellen Transformators (7) mit dem Wechselspannungsnetz (2) verbunden sind,
**dadurch gekennzeichnet, dass**
im Gleichspannungszwischenkreis (5) parallel zu den Umrichtern ein Schaltzweig (10) vorgesehen ist, in dem eine Vielzahl von Schaltelementen (11) vorgesehen ist, die Thyristoren sind, und die in einer Reihenschaltung miteinander verbunden sind, wobei der Schaltzweig beide Gleichspannungspole des Gleichspannungszwischenkreises verbindet, so dass sich der Gleichspannungszwischenkreis über die Vielzahl von Schaltelementen in einem Fehlerfall entladen kann.

2. Anordnung (1) nach Anspruch 1, wobei die Vielzahl von Schaltelementen zum Schalten von Strömen oberhalb von 1 kA innerhalb von weniger als 20 ms, bevorzugt weniger als 10 ms eingerichtet ist.

3. Anordnung (1) nach Anspruch 1, wobei der modulare Mehrstufenumrichter in Reihe geschaltete Schaltmodule (27) umfasst, deren Anzahl derart bemessen ist, dass die mittels des modularen Mehrstufenumrichters erzeugbare Spannung mindestens 5% größer als eine vorbestimmte Nennspannung ist.

4. Anordnung (1) nach Anspruch 3, wobei die Schaltmodule (27) Halbbrückenschaltmodule oder Vollbrückenschaltmodule sind.

5. Anordnung (1) nach einem der Ansprüche 3 oder 4, wobei jedem Schaltmodul (27) ein Schutzschalter (33) zugeordnet ist, mittels dessen ein Strom durch das Schaltelement (27) begrenzbar ist.

6. Anordnung (1) nach einem der vorangehenden Ansprüche, wobei eine Verbindung des ersten oder des zweiten Umrichters mit dem Wechselspannungsnetz mittels eines Überbrückungsschalters (9) überbrückbar ist.

7. Verfahren zum Schutz einer Anordnung (1) nach einem der vorangehenden Ansprüche mit folgenden Verfahrensschritten:
- Erkennen eines Überlastfehlers im Wechselspannungsnetz (2) und/oder der Anordnung (1),
- Schalten des wenigstens eines Schaltelementes (11) im Schaltzweig (10) der Anordnung (1), so dass ein Stromflussdurch den Schaltzweig (10) ermöglicht wird,
- Überbrücken einer Verbindung des ersten oder des zweiten Umrichters (3,6) mit dem Wechselspannungsnetz mittels eines dazu vorgesehenen Überbrückungsschalters (9).

## Claims

1. Arrangement (1) for controlling a power flow in an AC voltage grid (2) comprising
a converter arrangement having a first converter (3) and a second converter (6), wherein the converters (3, 6) are connectable to one another on the DC voltage side via a DC voltage link (5) and are each connectable to the AC voltage grid (2) on the AC voltage side, wherein each of the first and second converters is a modular multilevel converter, wherein the first converter (3) is connected to the AC voltage grid (2) by means of a matching transformer (4) and the second converter (6) is connected to the AC voltage grid (2) by means of a serial transformer (7), **characterized in that**
a switching branch (10) is provided in the DC voltage link (5) in parallel with the converters, a multiplicity of switching elements (11) being provided in said switching branch, said switching elements being thyristors and being connected to one another in a series circuit, wherein the switching branch connects the two DC voltage poles of the DC voltage link, such that the DC voltage link can discharge via the multiplicity of switching elements in the case of a fault.

2. Arrangement (1) according to Claim 1, wherein the multiplicity of switching elements are configured for switching currents above 1 kA within less than 20 ms, preferably less than 10 ms.

3. Arrangement (1) according to Claim 1, wherein the modular multilevel converter comprises series-connected switching modules (27), the number of which is dimensioned such that the voltage that is generatable by means of the modular multilevel converter is at least 5% greater than a predetermined rated voltage.

4. Arrangement (1) according to Claim 3, wherein the switching modules (27) are half-bridge switching modules or full-bridge switching modules.

5. Arrangement (1) according to either of Claims 3 and 4, wherein each switching module (27) is assigned a protective circuit-breaker (33), by means of which a current through the switching element (27) is able to be limited.

6. Arrangement (1) according to any of the preceding claims, wherein a connection of the first or of the second converter to the AC voltage grid is able to be bridged by means of a bridging switch (9).

7. Method for protecting an arrangement (1) according to any of the preceding claims comprising the following method steps:
- identifying an overload fault in the AC voltage grid (2) and/or the arrangement (1),
- switching the at least one switching element (11) in the switching branch (10) of the arrangement (1), thereby enabling a current flow through the switching branch (10),
- bridging a connection of the first or of the second converter (3, 6) to the AC voltage grid by means of a bridging switch (9) provided for this purpose.

## Revendications

1. Agencement (1) de commande d'un flux de puissance dans un réseau (2) à tension alternative comprenant
un agencement de convertisseur comprenant un premier convertisseur (3) et un deuxième convertisseur (6), dans lequel les convertisseurs (3, 6) peuvent être connectés entre eux du côté de la tension continue en passant par un circuit (5) intermédiaire à tension continue et du côté de la tension alternative respectivement au réseau (2) à tension alternative, dans lequel le premier et le deuxième convertisseurs sont respectivement un convertisseur modulaire à plusieurs étages, dans lequel le premier convertisseur (3), au moyen d'un transformateur (4) d'adaptation, et le deuxième convertisseur (6), au moyen d'un transformateur (7) série, sont connectés au réseau (2) à tension alternative,
**caractérisé en ce qu'**
il est prévu dans le circuit (5) intermédiaire à tension continue en parallèle avec les convertisseurs une branche (10) de coupure, dans laquelle il est prévu une pluralité d'éléments (11) de coupure, qui sont des thyristors et qui sont connectés entre eux suivant un montage en série, dans lequel la branche de coupure relie deux pôles à tension continue du circuit intermédiaire à tension continue, de manière à ce que le circuit intermédiaire à tension continue puisse être déchargé en cas de défaut par la pluralité d'éléments de coupure.

2. Agencement (1) suivant la revendication 1, dans lequel la pluralité d'éléments de coupure est agencée pour couper des courants au-dessus de 1 kA en moins de 20 ms, de préférence en moins de 10 ms.

3. Agencement (1) suivant la revendication 1, dans lequel le convertisseur modulaire à plusieurs niveaux comprend des modules (27) de coupure montés en série, dont le nombre est tel, que la tension pouvant être produite au moyen du convertisseur modulaire à plusieurs niveaux soit plus grande d'au moins 5 % qu'une tension nominale déterminée à l'avance.

4. Agencement (1) suivant la revendication 3, dans lequel les modules (27) de coupure sont des modules de coupure à demi-pont ou des modules de coupure à pont complet.

5. Agencement (1) suivant l'une des revendications 3 ou 4, dans lequel à chaque module (27) de coupure est associé un interrupteur (33) de protection, au moyen duquel un courant dans l'élément (27) de coupure peut être limité.

6. Agencement (1) suivant l'une des revendications précédentes, dans lequel une connexion du premier ou du deuxième convertisseur avec le réseau à tension continue peut être shuntée au moyen d'un interrupteur (9) de shuntage.

7. Procédé de protection d'un agencement (1) suivant l'une des revendications précédentes, comprenant les stades de procédé suivants :
- détection d'un défaut de surcharge dans le réseau (2) à tension alternative et/ou dans l'agencement (1),
- mise en circuit du au moins un élément (11) de coupure dans la branche (10) de coupure de l'agencement (1), de manière à rendre possible un flux de courant dans la branche (10) de coupure,
- shuntage d'une connexion du premier ou du deuxième convertisseur (3, 6) avec le réseau à tension alternative au moyen d'un interrupteur (9) de shuntage prévu à cet effet.
